Europäisches Patentamt

European Patent Office

Office européen des brevets

(11) Publication number: 0 205 758 A2

# EUROPEAN PATENT APPLICATION

(21) Application number: 86103061.7

(22) Date of filing: 07.03.86

(51) Int. Cl.⁴: **B65D 65/40 , B65D 81/30 , B32B 15/00 , B32B 27/00**

(30) Priority: 19.03.85 IT 1245885

(43) Date of publication of application:
30.12.86 Bulletin 86/52

(84) Designated Contracting States:
AT BE CH DE FR GB LI LU NL SE

(71) Applicant: I.P.M. Industria Plastica
Monregalese
Via Vigevano 1
I-12084 Mondovi(IT)

(72) Inventor: Baracco, Giovanni
Via Borsarelli 31
I-12080 Briaglia(IT)
Inventor: Ferrero, Gianfranco
Corso Europa 12 F
I-12084 Mondovi(IT)
Inventor: Forzano, Bartolomeo
Via Del Tirasegno 11
I-12084 Mondovi(IT)

(74) Representative: Porsia, Bruno et al
c/o Succ. Ing. Fischetti & Weber Via Caffaro
3/2
I-16124 Genova(IT)

(54) Packaging material for products sensitive to electric charges and magnetic and electromagnetic fields, and packages made from this material.

(57) The object of the invention is a packaging material and the packages made from this material, which are meant for products that are sensitive to electric charges and magnetic and electromagnetic fields, such as computer memory elements, and the like. The material according to the invention comprises at least one layer of metallized plastic material (2), and at lest one layer of permanently antistatic material (1), possibly with an air bell layer (3) therebetween, and with at least one further layer of foamed electricity-conductive material (4). Both the metallized layer (2) and the layer (1) having permanent antistatic properties consist, for example, of a foil of polyethylene, while the foam layer consists, for example, of foamed polyurethane, which is made to conduct electricity by incorporating therein finely dispersed graphite.

Fig.4

## Packaging Material for Products sensitive to Electric Charges and Magnetic and Electromagnetic Fields, and Packages made from this Material.

The object of the invention is a packaging material that is particularly suitable for products sensitive to electric charges and magnetic and electromagnetic fields, such as products of the electronic industry, computer memory elements, and the like.

In its simplest form, the packaging material according to the invention consists of a generally external layer of metallized plastic material, particularly a foil of metallized polyethylene, or the like, and of a generally internal layer of permanently antistatic plastic material, particularly a foil of permanently antistatic polyethylene, or the like.

For packaging delicate products, between the metallized layer and the antistatic layer there may be provided an intermediate air layer, preferably an air bell layer, the said air bells being obtained by suitably making in cellular form one of the two layers, for example, the antistatic layer, and by tightly connecting the two layers with each other, for example by welding or glueing them.

For packaging still more delicate and sensitive products, the packaging material according to the invention may be provided, in combination with any one or more of the said layers, with a layer of foamed material, such as, for example, of foamed polyurethane, of foam rubber, or the like, and the said foam layer is made to conduct electricity in known manner, for example by incorporating therein finely dispersed graphite.

To obtain a still higher protection, also two or more layers of each one of the said layer types may be provided in combination with one or more layers of any one or more of the remaining types of layers.

Of course, the packaging material according to the invention may be combined at will with any other desired types of packaging materials, known per se, and can be used for making any packages fit for the products to be packaged.

These and other features of the invention, and the advantages arising therefrom, will clearly appear in the following specification of some embodiments thereof, shown by way of non-limiting examples in the accompaning drawings, in which:

Figures 1 to 4 are perspective views diagrammatically showing four different types of packaging materials according to the invention.

Figures 5 and 6 are perspective views showing two packages made from the packaging materials according to the invention.

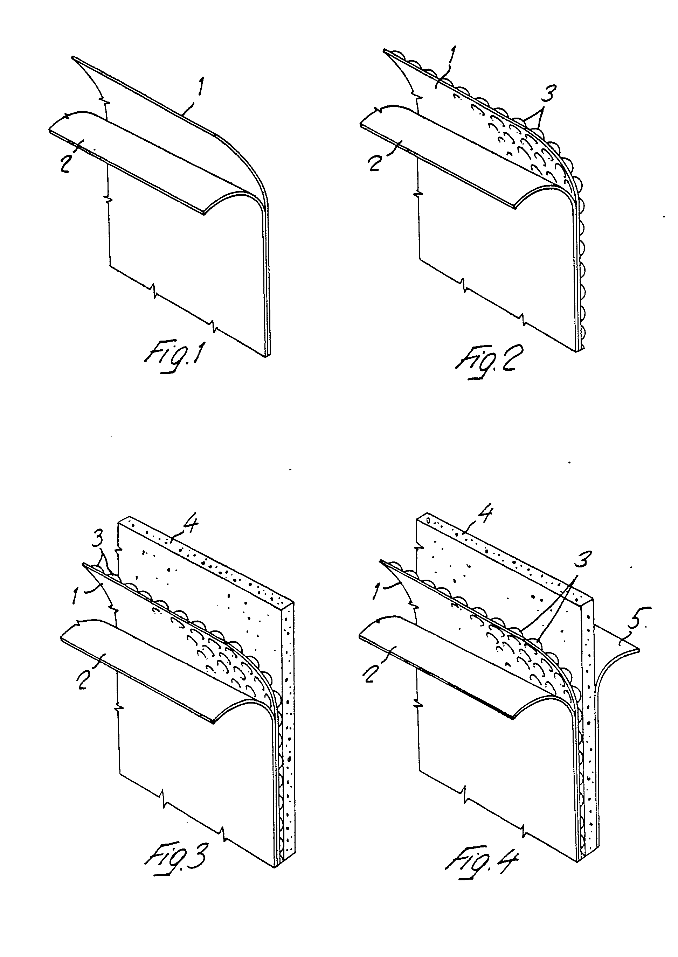

Referring to the drawings, in Figure 1 there is shown a first type of the packaging material according to the invention. This material consists of a foil 2 of metallized plastic material, and of a foil 1 of permanently antistatic plastic material. Preferably, both the metallized foil 2 and the antistatic foil 1 consist of polyethylene. The metallization of foil 2 is preferably effected with a metal conducting well electricity, for example alluminium, and is situated on the outward side of foil 2, i.e., on the side lying opposite to the antistatic foil 1.

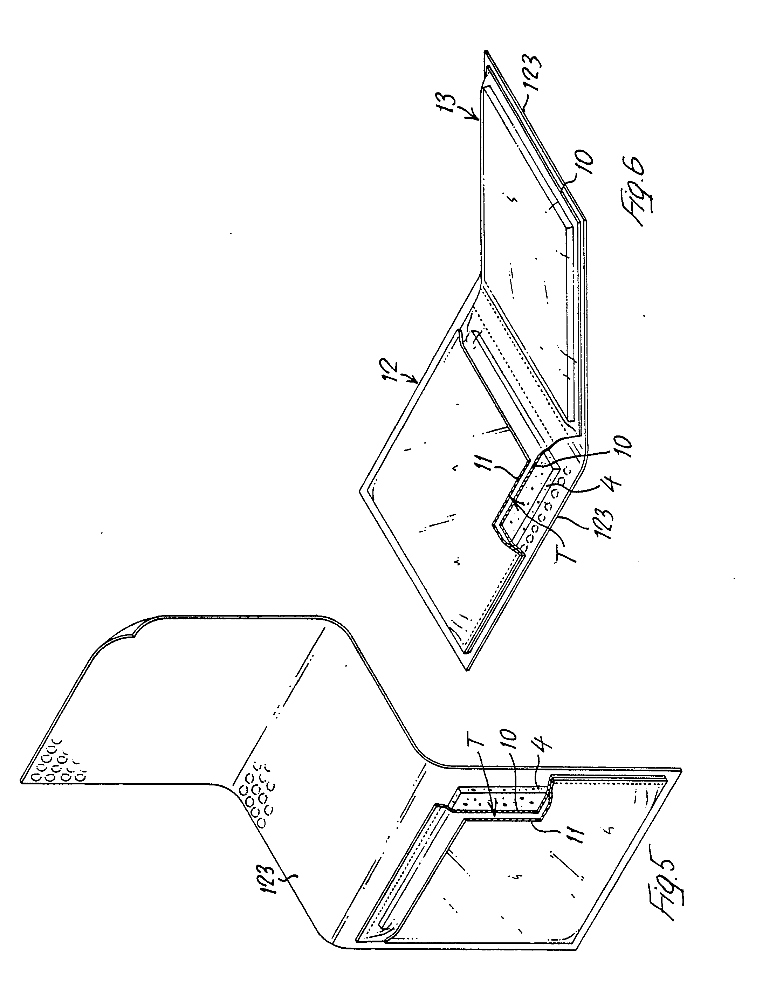

In the packaging material according to Figure 2, an air layer is included between the metallized foil 2 and the antistatic foil 1. More particularly, one of the two foils 1, 2, preferably the antistatic foil 1, has a cellular configuration and is tightly connected to the metallized foil 2, for example by welding or glueing, so that a plurality of closed air bells 3 are formed, which are evenly distributed over the whole extension of the packaging material. Preferably, the packaging material according to Figure 2 is used with the air bell 3 surface of the antistatic foil 1 turned inwardly, i.e., toward the packaged product, and with the metallized surface of foil 2 turned outwardly.

The packaging material according to Figure 3 comprises not only the metallized foil 2, and the antistatic foil 1, with air bells 3, but also a further layer 4 consisting of a foamed material which is so processed as to become an electricity conductive material. More particularly, the layer 4 may consist of foam rubber or of any suitable foamed plastic material, preferably foamed polyurethane. The electric conductivity of layer 4 can be obtained in known manner, for example, by incorporating therein uniformly dispersed graphite, or the like.

In Figure 4 there is shown a further packaging material according to the invention, which apart from the metallized foil 2, the antistatic foil 1 with the air bells 3, and the layer 4 of foamed electricity-conductive material, comprises also a further layer consisting of another foil 5 of antistatic plasic material, may be of permanently anti-static polyethylene. This foil 5 may have a consistence diferring from the consistence of foil 1, more particularly, it may be more rigid and thicker.

The above described layers 1, 2, 3, 4, and 5 of the packaging material according to the invention may be mutually superposed in any desired order and in any desired number, and may be also connected together in any suitable manner, either over their entire surface or only locally, for example, only along the peripheral edge of a band or of a sheet cut to shape, or the like. The packaging materials according to the invention may be also used for any packages, particularly packages for products or elements of the electronic industry, which are sensitive to electrostatic charges and magnetic and electromagnetic fields. In Figures 5 and 6 two possible packages made from the packaging materials according to the invention are shown merely by way of examples.

The package according to Figure 5 consists of a sheet 123 formed with the packaging material according to Figure 2, so that it comprises a metallized external layer 2 and an antistatic layer 1, with air bells 3 included between these two layers. Formed on the said sheet 123 is a pocket T consisting of an internal layer 10 and an external layer 11, which are both made from a foil of any suitable antistatic plastic material, particularly antistatic polyethylene. The two layers 10, 11 of antistatic plastic material are peripherally welded or glued to each other and to the underlying sheet 123. At least the foil of antistatic plasic material forming the external layer 11 of the pocket is preferably made either transparent or translucid, in order to allow to see the product contained in the said pocket T. The foil of antistatic plastic material forming the internal layer 10 and the external layer 11 of pocket T are preferably thicker and/or more rigid than the foil 1 of antistatic plastic material in the sheet 123. Between the said sheet 123 and the foil of antistatic plastic material forming the internal layer 10 of pocket T, there is interposed and included a layer made of foamed electricity-conductive material. The closing of pocket T may be performed by simply wrapping therearound the loose portion of the suitably long sheet 123.

The package shown in Figure 6 consists of a portfolio, and its two sections 12 and 13 which are foldable the one upon the other, comprise each an external layer formed by the sheet shown in Figure 5, i.e., consisting of a foil 2 of metallized plastic material and a foil 1 of antistatic plastic material, with air bells 3. Moreover, each section 12, 13 of the portfolio comprises an internal layer 10 consisting of a foil of antistatic plastic material which preferably is thicker and/or more rigid than the foil 1 of antistatic plastic material in the external layer 123. In each section 12, 13 of the portfolio, a layer 4 of foamed electricity-conductive material is incorporated between the external layer 123 and the internal layer 10. On the inward side of at least one section 12 of the portfolio there is provided a pocket T made from a foil 11 of antistatic plastic material, which preferably is like the foil of the internal layer 10, and which, more particularly, is either transparent or translucid. The product to be packaged, that may be, for example, a computer card, is housed in pocket T and, once the portfolio has been closed, it is protected by the two sections 12 and 13 of the portfolio, both against any mechanical stresses (owing to the padding formed by the air bell 3 layer and the foamed material 4) and agaist any electrical and magnetic effects (owing to the electric conductivity of the layer 4 of foamed material and the metallization of the foil 2 incorporated in the layer 123, as well as owing to the antistatic properties of the foils forming the layers 10 and 11 of the foil incorporated in the layer 123).

## Claims

1. A packaging material that is particularly suitable for products sensitive to electric charges and to magnetic and electromagnetic fields, such as products of the electronic industry, computer memory elements, and the like, characterized in that it comprises at least one layer consisting of metallized plastic material, particularly a metallized foil of polyethylene, or the like, and at least one layer consisting of permanently antistatic plastic material, particularly a foil of permanently antistatic polyethylene, or the like.

2. The material according to Claim 1, characterized in that between the metallized layer and the antistatic layer there is included an air layer, preferably in form of separate and evenly distributed air bells.

3. The material according to Claims 1 and 2, characterized in that in order to obtain the air bell layer, the foil of antistatic plastic material has a cellular configuration, and is glued or welded to the foil of metallized plastic material, preferably on the not-metallized side thereof.

4. The material according to any one or more of the preceding Claims, characterized in that the metallization of the layer consisting of a foil of metallized plastic material is effected with a metal conducting well electricity.

5. The material according to any one or more of the preceding Claims, characterized in that it comprises at least one further layer of foamed material, particularly of foam rubber or of foamed plastic material, such as foamed urethane, or the like, and the said foam layer is made to conduct electricity, for example, by incorporating therein finely dispersed graphite.

6. The material according to any one or more of the preceding Claims, characterized by at least one layer of foamed, preferably electricity-conductive material, which is interposed betwen two layers consisting of a foil of antistatic plastic material, or between one foil of antistatic plastic material and one foil of metallized plastic material, or else between two layers, of which at least one is formed by any one or more of the materials according to Claims 1 to 5.

7. A package characterized in that it consists of a case, a pocket, or the like, which on at least one side is delimited by any one of the materials according to any one or more of Claims 1 to 6.

8. The package according to Claim 7, characterized in that the case, pocket, or the like, is delimited on one side by a foil of plastic material having antistatic properties, and which preferably is either transparent or translucid.

9. A package characterized in that it consists of a portfolio with two sections that are foldable the one upon the other, and are made from any one of the materials according to any one or more of Claims 1 to 6.

10. The package according to Claim 9, characterized in that on the inward side of at least one of the sections of the portfolio there is provided a pocket made from a foil of any suitable antistatic plastic material, preferably transparent or translucid.

Fig.1

Fig.2

Fig.3

Fig.4

Fig.6

Fig.5